# EUROPEAN PATENT SPECIFICATION

(11) **EP 4 307 605 B1**
(45) Date of publication and mention of the grant of the patent: **12.02.2025**
(21) Application number: 23182807.0
(22) Date of filing: 30.06.2023
(51) Int. Cl.: H04L 9/00, H04L 9/32

(54) **REGISTERING AND VALIDATING A NEW VALIDATOR FOR A PROOF-OF-ORIGIN BLOCKCHAIN**
REGISTRIERUNG UND VALIDIERUNG EINES NEUEN VALIDATORS FÜR EINE HERKUNFTSNACHWEIS-BLOCKKETTE
ENREGISTREMENT ET VALIDATION D'UN NOUVEAU VALIDATEUR POUR UNE CHAÎNE DE BLOCS DE PREUVE D'ORIGINE

(30) Priority: 14.07.2022 FI 20225666
(43) Date of publication of application: 17.01.2024
(73) Proprietor: Nokia Solutions and Networks Oy, 02610 Espoo (FI)
(72) Inventor: THEETEN, Bart, 9112 Sinaai (BE); TIMMERS, Michael, 3020 Herent (BE)
(74) Representative: Espatent Oy

(56) References cited:
- KR-A- 20180 046 930
- US-A1- 2019 349 190
- SUZANA MARANHÃO MORENO BNDES BRAZIL: "Updated baseline text: D2.1- DLT use cases;AI4H-F-025-A02", vol. ai4h, 27 August 2019 (2019-08-27), pages 1 - 114, XP044272662, Retrieved from the Internet <URL:https%3A/extranet.itu.int/sites/itu-t/focusgroups/ai4h/docs/FGAI4H-F-025-A02.docx> [retrieved on 20190827]

## Description

### TECHNICAL FIELD

Various example embodiments relate to registering and validating a new validator for a proof-of-origin blockchain.

### BACKGROUND

This section illustrates useful background information without admission of any technique described herein representative of the state of the art.

Blockchains are typically permissionless. Since anyone can join a blockchain anonymously and without any permission requirement, the peers must be considered as untrusted. The peers are identified by a unique wallet address which does not reveal a true identity of a respective owner. Hence, owners can create as many wallets as they desire. A dishonest user willing to disrupt the blockchain could easily create 51% or more of identities to control a majority of identities known to the blockchain. This is called a Sybil Attack. Therefore, blockchains cannot simply consider every identity as equal. In result, different ways are needed in the assigning voting rights to identities in order to come to consensus about the blockchain state to establish trust.

Particular consensus algorithms are developed, particularly a proof-of-work consensus algorithm and a proof-of-stake consensus algorithm. In the proof-of-work consensus algorithm, an identity needs to spend processing resources in order to gain voting rights. In the proof-of-stake consensus algorithm, an identity gains voting rights proportional to a number of blockchain-native tokens the associated wallet puts in escrow, which they risk losing if caught cheating.

The proof of work consensus algorithm suffers from significant energy requirement. The proof of stake consensus algorithm gives an unfair advantage to those with a financial advantage, since the more money one puts down, the more voting rights that person obtains. Hence, the proof of stake consensus algorithm may suffer from insufficient resistance capability against pooling of voting rights regarding the state of the blockchain.

### SUMMARY

The scope of protection sought for various embodiments is set out by the independent claims. The embodiments and features, if any, described in this specification that do not fall under the scope of the independent claims are to be interpreted as examples useful for understanding various embodiments.

According to a first example aspect, there is provided a method for validating a new validator for a proof-of-origin, PoO, blockchain comprising
receiving an announce message comprising: a unique tag that uniquely identifies one fixed communication line of a subscriber of a fixed communication operator; a peer identifier of the new validator; an identifier of an authorised signer, and a cryptographic signature of the authorised signer over at least the unique tag, and the peer identifier;
verifying validity of the announce message;
the verifying comprising checking on the PoO blockchain that the authorised signer is registered on the PoO blockchain as an authorised signer; and
the verifying comprising checking the cryptographic signature of the authorised signer in the announce message;
if each checking of the verifying is positive, then accepting the new validator for the PoO blockchain and mapping in the PoO blockchain the unique tag with at least the peer identifier, otherwise refusing the new validator.

The authorised signer may be registered in the PoO blockchain as the authorised signer by the operator. The identifier of the new validator may comprise a public key of the new validator or a derivative of the public key of the new validator.

The identifier of the authorised signer may comprise a public key of the authorised signer or a derivative of the public key of the authorised signer.

The checking of the cryptographic signature of the authorised signer may comprise using a public key of the authorised signer corresponding to a private key with which the cryptographic signing has been performed.

The announce message may further comprise a cryptographic signature of the new validator over at least a nonce and optionally over the peer identifier;
the cryptographic signature of the authorised signer further extends over the cryptographic signature of the new validator; and
the verifying of the validity of the announce message further comprises checking the signature of the new validator.

The nonce may comprise a timestamp, a random code, and / or a sequence number. The nonce may comprise a derivative of the timestamp, the random code, and / or the sequence number. The derivative may be a unidirectional derivative. The derivative may be a cyclic redundance sum.

The checking of the cryptographic signature of the new validator may comprise using a public key of the new validator corresponding to a private key with which the cryptographic signing has been performed.

The unique tag may comprise a one-directional cryptographic hash of at least a unique device identifier and port used by a piece of hardware with which a fixed communication line is communicatively connected to the sender of the announce message for registering the new validator onto the PoO blockchain. This sender is also referred to as the owner of the new validator. The piece of hardware may be an access point. The piece of hardware may comprise at least 100 or at least 400 ports for different landlines, for providing connections with respective customer premise equipment.

The method may further comprise on accepting the new validator for the PoO blockchain, overwriting a previous mapping of the unique tag in the PoO blockchain with a new mapping. This overwriting limiting the number of validator registrations per unique tag to one. Alternatively, rather than overwriting, another embodiment could simply reject the new announcement if the unique tag of the new announcement is already registered on chain. In yet another embodiment, a fixed sufficiently small number, e.g., 4 or 8 of registrations per unique tag could be allowed to allow multiple people in a single household to each register their own validator, or to support situations in which multiple households reside in a single residence.

The announce message may further comprise a geographic indication of a location of the sender of the announce message for registering the new validator onto the PoO blockchain.

The cryptographic signature of the authorised signer may further extend over the geographic indication.

The geographic indication may be coarse grained to reduce spatial accuracy of the geographic indication.

According to a second example aspect, there is provided a method for announcing a new validator to a proof-of-origin, PoO, blockchain, comprising:
receiving an announce request from the owner of the new validator;
obtaining a PoO attestation for the new validator based on at least: a unique tag that uniquely identifies one fixed communication line of a subscriber of a fixed communication operator; a peer identifier of the new validator; an identifier of an authorised signer, and a cryptographic signature of the authorised signer over at least the unique tag, and the peer identifier;
containing the generated PoO attestation into an announce message; and
sending the announce message to existing validators of the PoO blockchain.

The method may further comprise obtaining a PoO attestation for the new validator by generating the PoO attestation for the new validator.

The method may further comprise generating the PoO attestation in two phases so that first a customer premises equipment produces a third cryptographic signature and subsequently the access point of the fixed line operator verifies the third cryptographic signature replaces that with the second cryptographic signature, if the third cryptographic signature was correct.

The method may further comprise obtaining a PoO attestation for the new validator from an authorised signer.

The method may further comprise
intercepting the announce request from the new validator;
obtaining a nonce, a peer identifier, and a cryptographic signature of the new validator;
checking the cryptographic signature of the new validator;
and performing the obtaining of the PoO attestation for the new validator only if the cryptographic signature of the new validator is correct.

The receiving of the announce request may be performed using a web server.

The method may further comprise obtaining and verifying an announce request authenticator as a condition for at least one of the obtaining the attestation, containing the attestation in the announce message, or sending the announce message to the existing validators. The authenticator may comprise or be a subscription identifier of the fixed communication operator. The authenticator may comprise or be a dedicated identifier issued by the fixed communication operator for a subscriber of the fixed communication operator.

The method may further comprise obtaining the unique tag from the fixed communication operator.

The method may further comprise maintaining a mapping from a current Internet address of the validator and the unique tag.

The unique tag may be obtained based on the mapping from the current IP address for the generating of the PoO attestation.

The method may further comprise sending an operator registration request to the PoO blockchain by the operator for gaining authority to attest PoO validators to the PoO blockchain. The operator registration request may comprise a certification authority issued attestation of the operator. The operator registration request may comprise public address of the operator. The public address may comprise a public key of the operator.

The method may further comprise providing an operator stake token by the operator to the PoO blockchain by the operator for securing reliability of the operator.

The method may further comprise performing network assertion to repeatedly verify approximate location or network residence of different validators. The network assertion may be performed using an internet latency test. The network assertion may be performed using a route tracing test to obtain records of different validators for cross-referencing.

According to a third example aspect, there is provided a method for registering a user device as a new validator to a proof-of-origin, PoO, blockchain, comprising:
providing a fixed communication network of an operator with a peer address of the new validator, a nonce, and a first signature generated by a public key corresponding to the peer address of the new validator over the peer address, and the nonce; and
causing transmission to the PoO blockchain of a PoO announce message comprising the peer address of the new validator, the nonce, the first signature, and a PoO attestation of an authorised signer attesting validity of the PoO announce message for the new validator.

The causing of the transmission of the PoO announce message may comprise sending the announce request using a hypertext transfer protocol, HTTP, protocol for interception and addition of the PoO attestation in the fixed communication network of the operator.

The causing of the transmission of the PoO announce message may comprise requesting addition of the PoO attestation from a PoO web server in the fixed communication network of the operator.

According to a fourth example aspect, there is provided an announce message for announcing a new validator to a proof-of-origin, PoO, blockchain, comprising:
a unique tag that uniquely identifies one fixed communication line of a subscriber of a fixed communication operator;
a peer identifier of the new validator;
an identifier of an authorised signer;
and a cryptographic signature of the authorised signer over at least the unique tag, and the peer identifier.

According to a fifth example aspect, there is provided a signal comprising the announce message of the fourth example aspect.

According to a sixth example aspect, there is provided a computer program comprising computer executable program code configured to execute the method of the first, second, or third example aspect.

According to a seventh example aspect, there is provided an apparatus comprising at least one processor; and at least one memory including computer program code; the at least one memory and the computer program code configured to, with the at least one processor, cause the apparatus at least to perform the method of the first example aspect.

According to an eighth example aspect, there is provided an apparatus comprising a processor configured to perform the method of the first example aspect.

According to a ninth example aspect, there is provided an apparatus comprising means for performing the method of the first example aspect.

According to a tenth example aspect, there is provided an apparatus comprising a memory and a processor that are configured to cause the apparatus to perform the method of the first example aspect.

According to an eleventh example aspect, there is provided an apparatus comprising at least one processor; and at least one memory including computer program code; the at least one memory and the computer program code configured to, with the at least one processor, cause the apparatus at least to perform the method of the first example aspect.

According to a twelfth example aspect, there is provided an apparatus comprising at least one processor; and at least one memory including computer program code; the at least one memory and the computer program code configured to, with the at least one processor, cause the apparatus at least to perform the method of the second example aspect.

According to a thirteenth example aspect, there is provided an apparatus comprising a processor configured to perform the second example aspect.

According to a fourteenth example aspect, there is provided an apparatus comprising means for performing the method of the second example aspect.

According to a fifteenth example aspect, there is provided an apparatus comprising a memory and a processor that are configured to cause the apparatus to perform the method of the second example aspect.

According to a sixteenth example aspect, there is provided an apparatus comprising at least one processor; and at least one memory including computer program code; the at least one memory and the computer program code configured to, with the at least one processor, cause the apparatus at least to perform the method of the second example aspect.

According to a seventeenth example aspect, there is provided an apparatus comprising at least one processor; and at least one memory including computer program code; the at least one memory and the computer program code configured to, with the at least one processor, cause the apparatus at least to perform the method of the third example aspect.

According to an eighteenth example aspect, there is provided an apparatus comprising a processor configured to perform the method of the third example aspect.

According to a nineteenth example aspect, there is provided an apparatus comprising means for performing the method of the third example aspect.

According to a twentieth example aspect, there is provided an apparatus comprising a memory and a processor that are configured to cause the apparatus to perform the method of the third example aspect.

According to a twenty first example aspect, there is provided an apparatus comprising at least one processor; and at least one memory including computer program code; the at least one memory and the computer program code configured to, with the at least one processor, cause the apparatus at least to perform the method of the third example aspect.

According to a twenty second example, there is provided a system. The system may comprise the apparatus of any of the seventh to eleventh example aspect. The system may comprise the apparatus of any of the twelfth to sixteenth example aspect. The system may comprise the apparatus of any of the seventeenth to twenty first example aspect.

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory, or polymer memory. The memory medium may be formed into a device without other substantial functions than storing memory or it may be formed as part of a device with other functions, including but not limited to a memory of a computer, a chip set, and a sub assembly of an electronic device.

Different non-binding example aspects and embodiments have been illustrated in the foregoing. The embodiments in the foregoing are used merely to explain selected aspects or steps that may be utilised in implementations. Some embodiments may be presented only with reference to certain example aspects. It should be appreciated that corresponding embodiments may apply to other example aspects as well.

### BRIEF DESCRIPTION OF THE DRAWINGS

For a more complete understanding of example embodiments, reference is now made to the following descriptions taken in connection with the accompanying drawings in which:
Fig. 1 shows an architectural drawing of a wired network topology of an example embodiment;
Fig. 2 shows a wired network topology of another example embodiment;
Fig. 3a shows a basic signalling of an example embodiment;
Fig. 3b shows a signalling diagram of an example embodiment;
Fig. 3c shows a request header of an example embodiment;
Fig. 3d shows a proof-of-origin, PoO, attestation header;
Fig. 4b shows another signalling diagram of an example embodiment;
Fig. 5 shows a flow chart illustrating operation of a method of an example embodiment in an access point;
Fig. 6 shows a flow chart of a method of an example embodiment for verification of a new validator by blockchain peers;
Figs. 7a to 7c show signalling charts of methods of some example embodiments;
Fig. 8 shows a block diagram of an apparatus of an embodiment;
Fig. 9 shows a flow chart of a method for validating a new validator for a PoO blockchain;
Fig. 10 shows a flow chart of a method for announcing the new validator to the PoO blockchain; and
Fig. 11 shows a flow chart of a method for registering a user device as a new validator to the PoO blockchain.

### DETAILED DESCRIPTON OF THE DRAWINGS

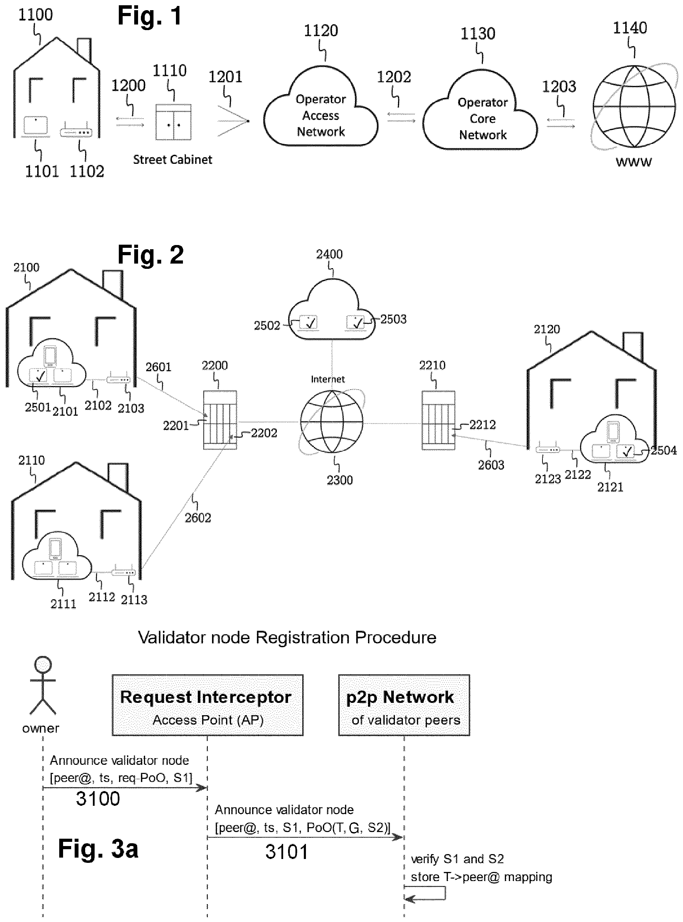

An example embodiment and its potential advantages are understood by referring to Figs. 1 through 11 of the drawings. In this document, like reference signs denote like parts or steps.

Fig. 1 shows an architectural drawing of a wired network topology of an example embodiment. From left to right, Fig. 1 shows an end-user home 1100 where the user can use a computing device 1101 to connect to the internet 1140. This computing device 1101 is connected via her customer premise equipment, CPE, 1102, such as her home router. In an example embodiment, this connection is wired, (e.g., using an ethernet cable) or wireless, (e.g., using wireless local area network, WLAN. The CPE 1102 is physically connected over a customer premise connection 1200 to operator equipment. In an example embodiment, the customer premise connection 1200 is connected to a given physical location. In an example embodiment, the customer premise connection 1200 comprises a wired medium such as a twisted copper pair, a coaxial cable, or an optical fibre. In an example embodiment, the customer premise connection 1200 comprises a wireless connection, such as a directional WLAN, a free-space optical communication link, or microwave communications link.

In an example embodiment, the operator equipment is hosted in a street cabinet 1110 near the user's home 1100. In an example embodiment, the one street cabinet 1110 physically connects tens or hundreds of home connection cables, each cable providing service fixed communication connectivity (e.g., internet access, telephony) to one customer or more particularly to one termination point. Notably, one home or commercial premise may have two or more termination points. In an example embodiment, the termination point refers to a point at which the CPE is connectable or where a communication device of the customer is connectable to the Internet via the operator equipment. For example, the termination port may be implemented as a wall socket that is connected to one of the ports of a network switch in a technical room of a business or residential building.

In an example embodiment, the street cabinet 1110 connects the termination points and an associated operator access network 1120 with a termination point circuitry 1201. In an example embodiment, the operator access network 1120 is further connected through a core network connection 1202 with a core network 1130 of the operator. In an example embodiment, the core network 1130 has an Internet connection 1203 to the internet 1140.

The access network 1120 maintains configuration data identifying which physical link 1200, and hence subscriber, initiated a given communication, such as an IP packet-based transmission. Therefore, the operator possesses a unique and tamper-resistant identification of the original initiator of the traffic. However, this tamper-resistant identification is generally not available beyond the core network of the operator. When a data transmission reaches a destination on some Internet-connected server, this knowledge is lost and so not available. The source IP address remains, but that address is easily spoofed and does not identify the original sender in case of redirecting her data traffic, e.g., via a virtual private network, VPN, tunnel, or via a proxy server.

Fig. 2 shows a wired network topology of another example embodiment. Three buildings 2100, 2110, 2120 each have a limited number of households at physical ports 2201, 2202, 2212 on operator-owned access nodes 2200, 2210. In an example embodiment, one or more of the access nodes 2200, 2210 is a digital subscriber line access multiplexer, DSLAM. In an example embodiment, one or more of the access nodes 2200, 2210 is deployed at street cabinets 2200, 2210. In an example embodiment, one physical subscriber line, such as an optical fibre, is multiplexed. For example, one optical fibre may connect all apartments of a block of flats or all operator lines of one office building with a local switch configured to divide the multiplexed connections to each separate subscriber connection point, such as wall sockets. Functionally, each such intermediately multiplexed connection to separate subscriber connection points is seen as one fixed connection of the operator.

The access nodes 2200, 2210 provide respective customer premise connections 2601, 2602, 2603 for different customers, here depicted as separate households, each equipped with a respective CPE 2103, 2113, 2123.

Fig. 2 further illustrates home networks 2101, 2111, 2121 including respective end-user devices with Internet connectivity, such as personal computers, mobile phones, tablets, Internet of Things devices, etc. In an example embodiment, the end user devices are connected to respective home routers 2103, 2113, 2123, via a wired connections, such as the ethernet, or a wireless connection, such as the WLAN, 2102, 2112, 2122 respectively. The home routers 2103, 2113, 2123 terminate a "last mile" of fixed lines at the other end of the access nodes. The home routers can be seen as a first point of access into the operator network. Other routers and/or switches could additionally be deployed in a home network, but that is irrelevant for the present discussion. Ultimately, all network traffic originating from an end-user device in the home and destined for the Internet 2300, passes through the home router 2103, 2113, 2123 and over the customer premise connections 2601, 2602, 2603 towards the access node 2200, 2210 of the operator.

As drawn in Fig. 2, In an example embodiment, the access nodes 2200, 2210 aggregate internet traffic for a limited number of households 2100, 2110, 2120. In an example embodiment, the access nodes 2200, 2210 are deployed geographically close to the households they serve. As such, the access nodes 2200, 2210 act as a proxy for limited real-estate available in a geographical area and can therefore be seen as a scarce resource.

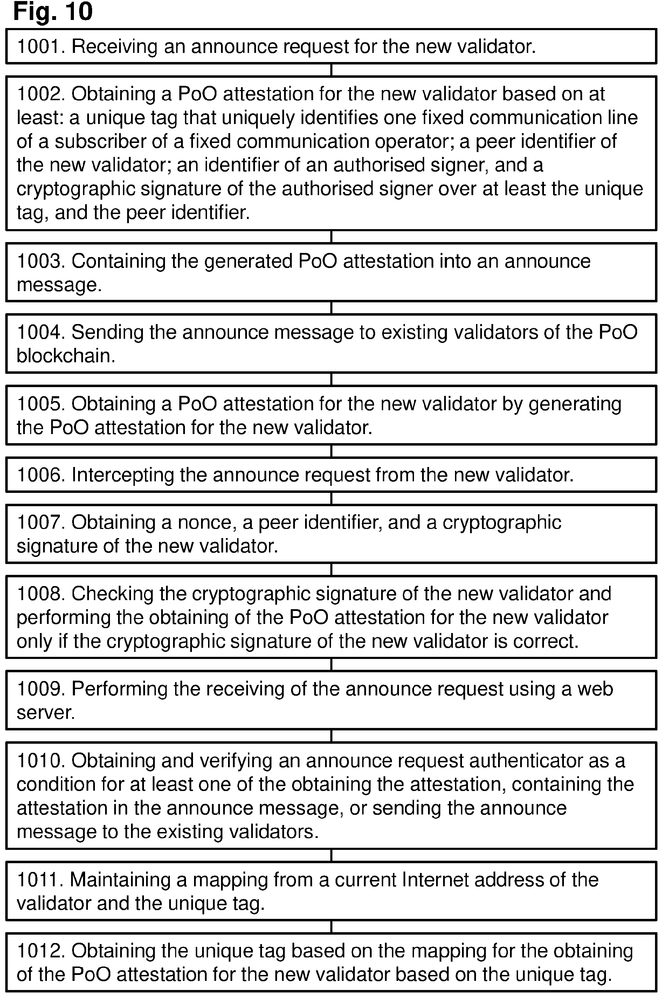

In Fig. 2, 10 ports are drawn per access node 2200, 2210 for simplicity. In an example embodiment, one access node has hundreds of ports. Moreover, Fig. 2 simplifies an entire operator network ultimately providing Internet access 2300 as outlined in Fig. 1, and focusses on the physical termination of physical lines, i.e., wires reaching into the subscriber premises, aka the last mile.

In an example embodiment, there is provided a PoO blockchain. The security of the blockchain is assured by assigning a sufficiently large set of validator nodes, which check the validity and order of transactions (e.g., monetary transfers, ownership records, etc.) that are submitted by different blockchain users. The validator nodes can propose new blocks of validated transactions to their peers, i.e., other validator nodes, by broadcasting a new block on a peer-to-peer network interconnecting all the validators. The validator nodes also check the validity of blocks proposed by other validators. A distributed consensus algorithm of the blockchain dictates that validators should follow the longest chain of validated blocks and add proposed valid blocks to that chain.

In order to avoid any one validator node proposing a disproportionate number of blocks to the blockchain in comparison to that of other validator nodes, the consensus algorithm requires the validators to be randomly chosen to be allowed to propose a block. If a proof-of-work consensus algorithm were used, all validators would race to first find an answer to a cryptographic puzzle. On the other hand, if a proof-of-stake algorithm were used, a randomly chosen subset of validators would be allowed to mutually agree on the next block. The voting rights would be proportional to the number of tokens being staked. A probability of being elected to the consensus group is proportional to the number of votes and therefore also proportional to the stake.

In an example embodiment, a proof-of-origin algorithm is used to choose proper validators. This differs from prior known consensus algorithms. Here, voting rights are directly linked to a scarce resource that is linked to physical property resources, i.e., real-estate with fixed communication lines.

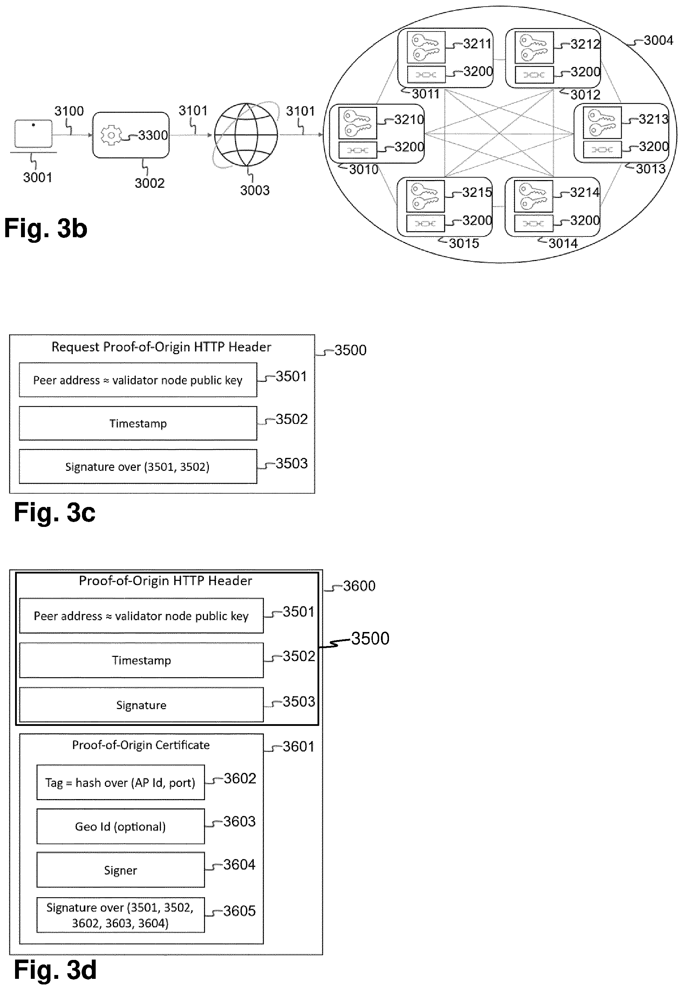

In an example embodiment illustrated by Fig. 3b, a Proof-of-Origin, PoO enabled blockchain 3200 requires a validator node 3010, 3011, 3012, 3013, 3014, 3015 to be announced through the HTTP(S) request 3101 to a blockchain peer-to-peer network 3004.

Each validator node 3010...3015 has a unique cryptographic keypair 3210...3215 associated with that validator node. In each keypair 3210...3215 there is a public key and a private key. The public key acts as a unique identification of that validator, also called peer address. Each validator stores a copy of the blockchain state 3200. During the announcement procedure, a PoO attestation is generated for the user in question, or more accurately, for a current user of a given fixed communication line. In an example embodiment, the PoO attestation is automatically attached to the announcement request by request interception logic 3300 running on operator owned equipment 3002.

In an example embodiment, the operator owned equipment is or comprises any of the CPE; a Home Router; equipment in the street cabinet such as a DSLAM, optical network terminal ONT; equipment in the access network, e.g., broadband remote access server, BRAS, ONT; or equipment in the core network of the operator. Here, this operator owned equipment is referred to as an access point AP 3002.

In an example embodiment, the announce request needs to be sent from the home network of the fixed communication operator so that the announce request can be intercepted and extended with the PoO attestation. Later, when the validator has been accepted to operate in the PoO blockchain (i.e., to produce blocks to the PoO blockchain), no more interception is required, and the validator node of the user can be used through any Internet connection. The registration process (commenced with announce request) happens only once for one validator node. In an example embodiment, it is required to refresh the attestation. For example, the attestation may comprise an expiration date after which the validator node would no longer be accepted in the PoO blockchain. In an example embodiment, the operator announces a cancellation of the validator to the PoO blockchain, e.g., by storing a new element to an exclusion or invalidation list in the PoO blockchain. The operator can thus cancel a validator of a user when the user moves out of premises of the operator or ceases to subscribe a connection from the operator.

In order to enable the user to submit the announcement request, the user, or owner as in Fig. 3a, sends an announcement message 3100 from her device, announce validator node, to register herself to a proof-of-origin blockchain in a validator node registration procedure of an example embodiment. In an example embodiment, the announcement message 3100 comprises an HTTP proof-of-origin, PoO, request header 3500 shown in Fig. 3c. In an example embodiment, the PoO request header comprises a peer identifier 3501 of the owner, peer@, such as a peer address of the owner or a validator node public key of the owner or a public address derived from the public key, or some other derived identifier of the owner. In an example embodiment, the request PoO request header further comprises a nonce n 3502. In an example embodiment, the request PoO request header further comprises a first signature S1 3503, over the aforementioned peer identifier 3501 and the nonce n 3502. The first signature S1 3503 is produced using a private key of the owner. In an example embodiment, the owner identifier is a public key or a derivative of the public key corresponding to the private key of the owner that is used in producing the first signature S1 3503.

In an example embodiment, the nonce n 3502 is or comprises a timestamp, a random code, and / or a sequence number. In an example embodiment, the nonce n 3502 is or comprises a derivative of the timestamp, the random code, and / or the sequence number. In an example embodiment, the derivative is a unidirectional derivative. In an example embodiment, the derivative is a cyclic redundance sum.

After obtaining the PoO request header from the user and successfully verifying the first signature, the operator produces the PoO attestation 3601 based on this PoO request header and tamper protection provided by cryptographic signatures of the user and the attestation provider, see Fig. 3d. In an example embodiment, the PoO attestation 3601 is generated based on origin attestation data concerning the user. The PoO attestation 3601 and the PoO request header 3500 are contained within a PoO attestation header 3600.

In an example embodiment, the origin attestation data comprise a unique tag 3602, T. The unique tag T 3602 is derived from at least a unique equipment Id (AP), and the port assigned to the user and used by the user for her fixed line communications. In an example embodiment, the unique tag T 3602 is derived using a unidirectional hash designed to mitigate reverse derivation. In an example embodiment, the unique tag T 3602 is derived using encryption. In an example embodiment, the unique tag T 3602 comprises an autonomous system number ASN assigned by an internet assigned numbers authority, IANA, for the access point and a port identifier of a port assigned to a respective fixed communication line.

In an example embodiment, the origin attestation data comprise a geographical identifier G 3603 indicative of region where a user device 3001 resides. The geographical identifier G 3603 may encode the geographical area in which the access point AP 3002 is located, e.g., for allowing geographical information to be used by the consensus algorithm if that algorithm attempts to assure a sufficient geographical spread or focus among the members of a consensus group. In an example embodiment, the geographical information is coarse grained, such as reflecting only country, state, city, or a geographical region level such as a region of 50 x 50 km or 10 x 10 km.

In an example embodiment, the origin attestation data comprise an identifier 3604 of an authorised signer. In an example embodiment, the identifier 3604 of the authorised signer identifies an account usable by the operator to sign the attestation 3601. In an example embodiment, a set of authorised operators and / or their respective identifiers are stored in a chain variable, which can be consulted by anyone on the PoO blockchain. In an example embodiment, each authorised operator is allowed to register authorised signers on the PoO blockchain, e.g., one or more authorised signers per access point AP 3002 owned by the operator. In an example embodiment, an authorised signer is dedicated to a given CPE.

In an example embodiment, the origin attestation data comprise a signature 3605 of the authorised signer S2 over the peer identifier peer@ 3501 of the owner, the nonce n 3502, the first signature S1 3503, the unique tag T 3602, the geographical identifier G 3603, and optionally over the identifier 3604 of the authorised signer. The PoO attestation may cryptographically attest that the data announced by the user device 3001 are verified correct by the operator.

In an example embodiment, the data of the PoO request header 3500 of Fig. 3c are obtained from a payload field of a PoO attestation request instead of a header. Likewise, in some example embodiments, other header data fields are conveyed in a payload. The use of header data fields may simplify processing in some cases, whereas the use of payload as a carrier for various data fields may facilitate some header conversions, error correction, error detection, and / or compliance with header size restrictions that could be applied in some parts of the Internet.

In different embodiments, the access point 3002 is implemented by different entities, such as the CPE, a home router, equipment in the street cabinet, e.g., DSLAM, ONT, equipment in the access network, e.g., BRAS, ONT, or equipment in the core network of the operator.

In an example embodiment, the user device 3001 is used to announce a validator node 3015 and run the validator node 3015. In an example embodiment, it need not be the same device that announces the validator node and runs the validator node. Instead, a different device runs the validator node. It suffices that the validator node is provided with an account under which the validator node is running i.e., the public key part of the keypair 3215 of the validator node and that this account is associated with a valid proof-of-origin attestation and registered on the PoO blockchain.

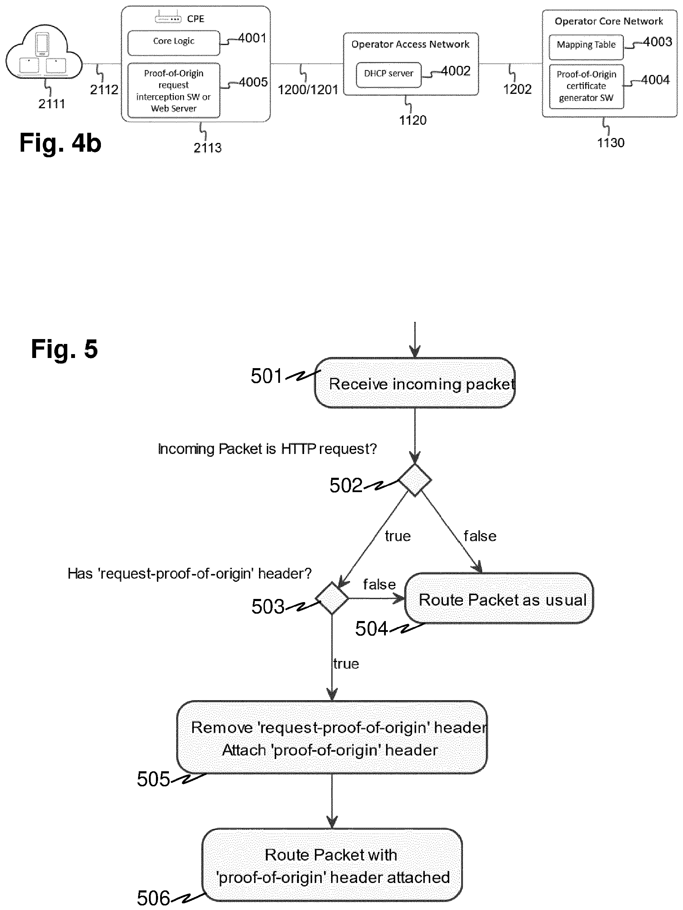

As mentioned in the foregoing, the announcement message 3100 of Fig. 3a is sent as an HTTP request so that the access point 3002 can intercept the request based on its headers (See Fig. 3c, ref. sign 3500). As mentioned in the foregoing, the announcement message 3100 passing through the request interception logic 3300 can be intercepted and modified. On noticing the PoO request header in a received HTTP request, the request interception logic 3300 replaces that PoO request header with PoO attestation header, before routing it onwards to its destination 3004, the peer-to-peer network powering the PoO blockchain. In another example embodiment illustrated by Fig. 4b, the intercepting and an associated (deep packet) inspection can be avoided by making use of an explicit HTTP(S) request to a PoO module 4005 running on equipment such as the CPE 2113 and receiving a valid PoO attestation in response. With the PoO attestation, the owner can then send an HTTP(S) request that includes a valid PoO request header, for announcing the validator node of the owner in her sub-network 2111 to a proof-of-origin-enabled peer. The embodiment shown by Fig. 4b supports both interception and web server methods so the user device 3001 can use either one.

Fig. 5 shows a flow chart illustrating operation of a method of an example embodiment in the access point AP 3002, comprising one or more of:
501. receiving an incoming IP data packet;
502. detecting whether the incoming IP data packet is an HTTP request;
503. if the incoming IP data packet is an HTTP request, detecting whether the incoming IP data packet comprises a PoO request header (See Fig. 3c, ref. sign 3500);
504. if neither detection was positive, then passing the incoming IP packet as usually;
505. if both detections were positive, then modifying the incoming IP packet;
506. in the modifying the incoming IP packet, removing the PoO request header (See Fig. 3c, ref. sign 3500), and inserting the PoO attestation header (See Fig. 3d, ref. sign 3600).
507. in the modifying the incoming IP packet, passing the modified IP packet

If the access point AP 3002 is a router, then the passing may comprise routing the IP packet or the modified IP packet.

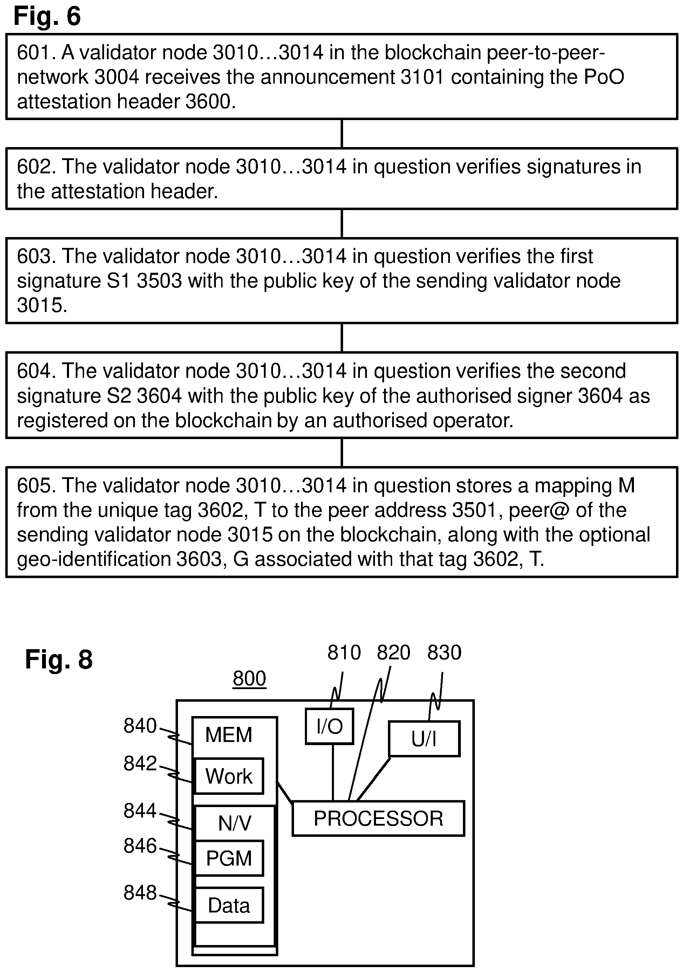

Fig. 6 shows a flow chart of a method of an example embodiment for verification of a new validator by blockchain peers. The method comprises one or more of: 601. A validator node 3010...3014 in the blockchain peer-to-peer-network 3004 receives the announcement 3101 containing the PoO attestation header 3600.

602. The validator node 3010...3014 in question verifies signatures in the attestation header.

603. The validator node 3010...3014 in question verifies the first signature S1 3503 with the public key 3501 of the sending validator node 3015.

604. The validator node 3010...3014 in question verifies the second signature S2 3604 with the public key of the authorised signer 3604 as registered on the blockchain.

605. The validator node 3010...3014 in question stores a mapping M from the unique tag 3602, T to the peer address 3501, peer@ of the sending validator node 3015 on the blockchain, along with the optional geo-identification 3603, G associated with that tag 3602, T. Since this is a mapping, a future registration for the same unique tag 3602, T will overwrite the mapping record M for enabling only one validator node to be associated with the unique tag T. In an example embodiment, a plurality of mappings is allowed for one unique tag, such as two or five. In this case, new mappings may overwrite oldest mappings on meeting a mapping limit for one unique tag. In an example embodiment, one physical line is multiplexed for two or more users. Let us assume that each user has a separate subscription from the operator and their subscription lines are separated to their own wall sockets. Now, with one unique tag for one physical line, different users could lose their validator nodes to other users sharing the same physical line. In this example embodiment, the unique tag is defined further using a subscriber identifier or a sub-port identifier. Then, each user is assigned one unique tag that can be used as if the user had a dedicated physical line. In an alternative example embodiment, no new registration is allowed for the unique tag 3602, T.

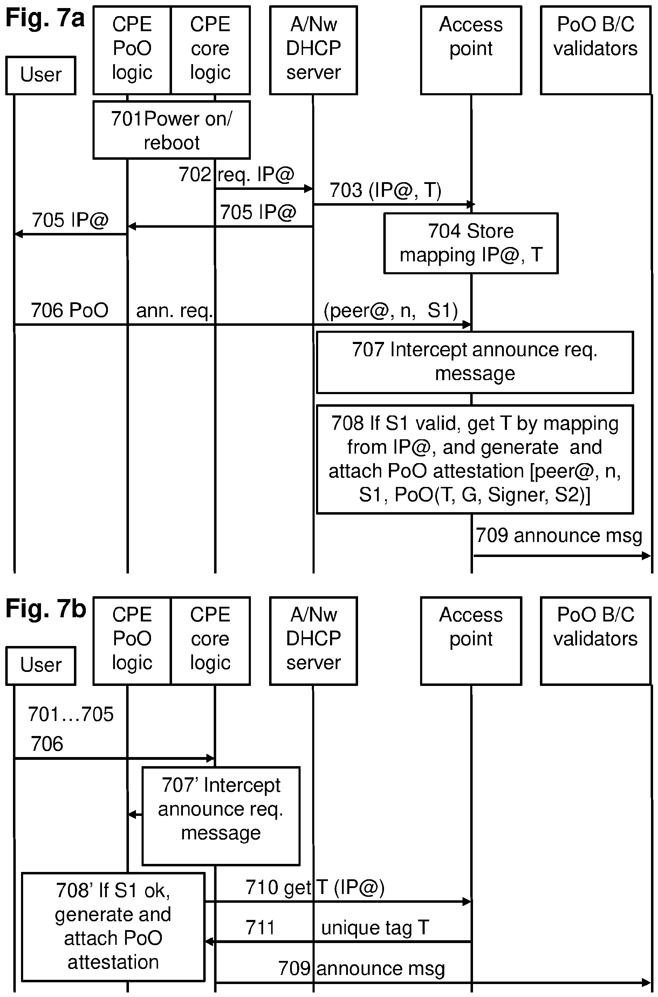

Fig. 7a shows a signalling chart of a method of an example embodiment, illustrating following events:
701. Powering on a CPE including both a core logic and a PoO logic.
702. The core logic sends an IP address request to an access network DHCP server.
703. The DHCP server issues the IP address for the CPE and sends the IP address to an access point in a core network or access network for mapping between the issued IP address and an access line used by the CPE. The access line may here refer to a physical line or port for any traffic related to this IP address. The access point is aware of or obtains knowledge of the access line. In an example embodiment, the access line is identified by a unidirectional cryptographic hash taken from at least an equipment identifier of a piece of equipment that has the port from which the access line extends to the CPE.
704. The access point stores the mapping from the IP address IP@ to the unique tag T.
705. The DHCP server informs the CPE and the user of the issued IP address.
706. A new validator (candidate) sends a PoO announcement request towards the PoO blockchain. In an example embodiment, the request comprises an authenticator, e.g., for mitigating attackers registering their validator nodes through hijacked user devices. In an example embodiment, the authenticator comprises non-public information jointly known by the user and the operator. In an example embodiment, the authenticator comprises a subscriber ID of the user for the operator, e.g., as found in invoices of the operator. In an example embodiment, operators supporting the PoO validators generate a PoO user authenticators for their subscribers. The authenticator may be retrievable by the user through a self-service portal of the operator. That authenticator is then sent in announce request 706 as additional protection, e.g., as a header field.
707. The access point intercepts the PoO attestation. In an example embodiment, the announce request 706 is intercepted based on deep packet inspection looking into HTTP headers. In an example embodiment, where the authenticator is required, presence of a valid authenticator is verified here and unless identified, the announce request is processed no further.
708. The access point checks if the received announce request is valid, e.g., whether the access point received the PoO request header, and the first signature is valid. If the first signature S1 is valid, then the access point obtains the unique tag based on the stored IP address mapping, generates, and attaches a PoO attestation for the peer @, n, S1, and S2 as described in the foregoing.
709. The access point sends an announce message to the PoO blockchain with the PoO attestation attached. In an example embodiment, the announce message may correspond to the announce request except a PoO request header is replaced by a PoO attestation header that comprises the PoO attestation. In an example embodiment, the sender IP address is maintained as the IP address of the new validator as it were in the announce request 706.

Fig. 7b shows a signalling chart of a method of another example embodiment. This method corresponds to that of Fig. 7a by events 701 to 705 so these are not drawn.
706. The announce request 706 is sent as in Fig. 7a.
707'. The announce request is intercepted by the CPE core logic.
708'. The PoO logic checks if the received announce request is valid, e.g., whether the PoO logic received the PoO request header, and the first signature is valid. If the first signature S1 is valid, then the PoO logic obtains the unique tag based on the stored IP address mapping, generates, and attaches a PoO attestation for the peer @, n, S1, and S2 as described in the foregoing. The PoO logic obtains or has already obtained before the generating of the PoO attestation the unique tag from the Access network or from access point.
710. within step 708', the PoO logic obtains the unique tag T by sending a unique tag request with the IP address of the new validator candidate to the access point.
711. responsive to the unique tag request, the access point sends the unique tag T to the PoO logic.

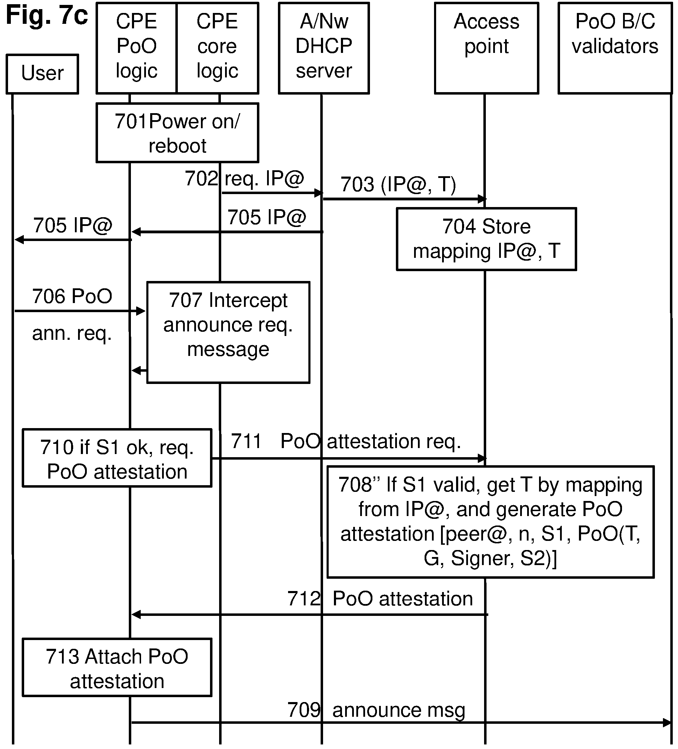

709. The PoO logic sends the announce message as described with reference to Fig. 7a. In the embodiment of Fig. 7b, the CPE operates as the authorised signer. For example, the CPE comprises a trusted execution environment in which the CPE stores a copy of the public and private keys and in which the CPE computes the second signature. In another example embodiment illustrated by Fig. 7c, the CPE requests access point to generate the PoO attestation by a PoO attestation request 711.

In a yet further example embodiment, the PoO attestation is generated in two phases so that first the PoO logic of the CPE produces a third cryptographic signature. Subsequently, the core network of the fixed line operator, e.g., the access point, verifies the third cryptographic signature replaces that with the second cryptographic signature, if the third cryptographic signature was correct. The PoO logic may redirect an intermediate form of the attestation signed by the third cryptographic signature to the access point or other entity in the access network or core network of the operator for the generation of the final form of the attestation with the second cryptographic signature. By using the intermediate cryptographic signing with the third cryptographic signature, each CPE may use individual public/private key pairs and still the attestations provided to the PoO blockchain can appear to originate from one or few authorised signers.

### Consensus Group Election

At each blockchain epoch identified as the duration to generate a configured number of blocks, a new random consensus group is elected. Each successfully registered validator node 3010...3015 is given an equal likelihood of being elected. In an example embodiment, a minimal geographical distribution or focus is used as an additional constraint in electing members of the consensus group.

### Authorised Operators & Registering attestation Issuing Entities

Fixed communication line operators, or internet service providers are generally considered as trusted parties that:
Deploy the interception logic or web server logic onto their APs;
Trustfully execute the provisioning of the PoO attestations; and
Register the attestation issuing entities on the blockchain for the participating APs under their control.

In an example embodiment, a set of authorised operators is registered on blockchain, or in a chain variable. There is only a very limited number of such authorised operators: one for each publicly known fixed line communication operator in the market. Adding a new authorised operator on the blockchain requires a majority vote from the blockchain peers.

In an example embodiment, the PoO blockchain requires an operator to stake tokens, which they would lose if anyone can prove dishonest behaviour. In an example embodiment, the dishonest operator is banned from further participation. In an example embodiment, the peers are enabled to promote temporary or permanent banning of a dishonest peer in which case peers of the blockchain vote regarding such a ban, and the voting result is automatically effected by the PoO blockchain.

In an example embodiment, a network of assertion enabled peers (e.g., CPEs with dedicated logic) continually assert an approximate location of other peers. In an example embodiment, the assertion enabled peers assert the approximate location of each other through a system of challenge-response interactions, measuring the latency, gathering traceroute information, etc. When deviations are detected between the approximate location (or other information, such as an IP address of a peer and IP address ranges allocated to respective operator) and the location purported in the attestation, it can be determined that the operator fails to validate its users as required by the PoO blockchain.

In an example embodiment, the CPE supplements messages to the PoO blockchain peers with PoO attestations, while another network entity of the operator generates and delivers the PoO attestations for the CPEs. Other implementations are also possible, such as that the CPE further generates the PoO attestations.

Fig. 8 shows a block diagram of an apparatus 800 according to an embodiment.

The apparatus 800 comprises a memory 840 including a persistent computer program code 850. The apparatus 800 further comprises a processor 820 for controlling the operation of the apparatus 800 using the computer program code 840, a communication unit 810 for communicating with other nodes. The communication unit 810 comprises, for example, a local area network (LAN) port; a wireless local area network (WLAN) unit; Bluetooth unit; cellular data communication unit; or satellite data communication unit. The processor 820 comprises, for example, any one or more of: a master control unit (MCU); a microprocessor; a digital signal processor (DSP); an application specific integrated circuit (ASIC); a field programmable gate array; and a microcontroller.

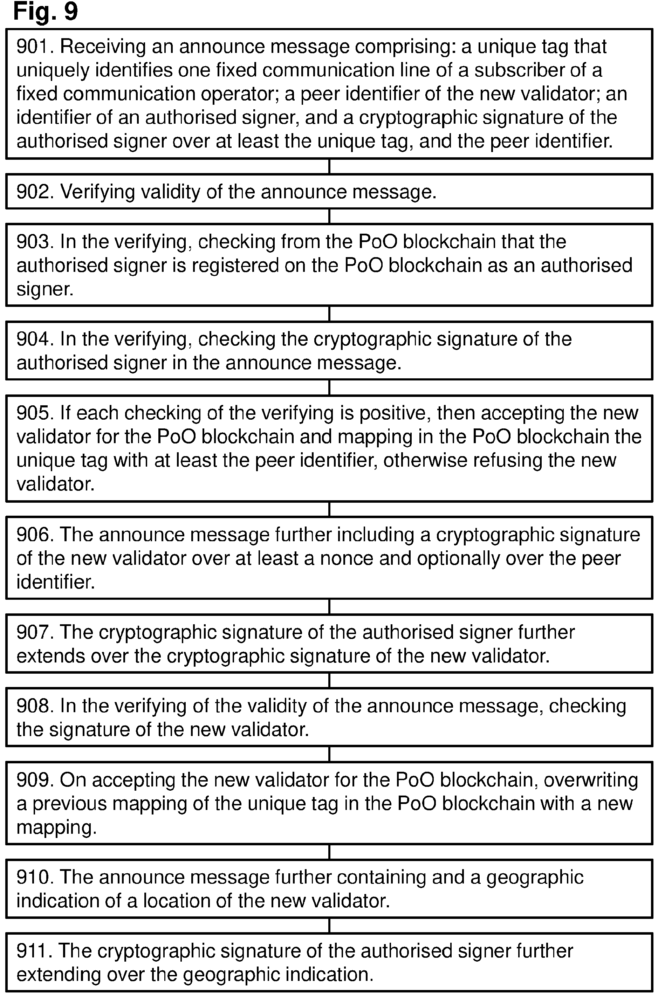

Fig. 9 shows a flow chart of a method for validating a new validator for a PoO blockchain, the method comprising one or more of the following steps:
901. Receiving an announce message comprising: a unique tag that uniquely identifies one fixed communication line of a subscriber of a fixed communication operator; a peer identifier of the new validator; an identifier of an authorised signer, and a cryptographic signature of the authorised signer over at least the unique tag, and the peer identifier.
902. Verifying validity of the announce message.
903. In the verifying, checking from the PoO blockchain that the authorised signer is registered on the PoO blockchain as an authorised signer.
904. In the verifying, checking the cryptographic signature of the authorised signer in the announce message.
905. If each checking of the verifying is positive, then accepting the new validator for the PoO blockchain and mapping in the PoO blockchain the unique tag with at least the peer identifier, otherwise refusing the new validator.
906. The announce message further including a cryptographic signature of the new validator over at least a nonce and optionally over the peer identifier.
907. The cryptographic signature of the authorised signer further extends over the cryptographic signature of the new validator.
908. In the verifying of the validity of the announce message, checking the signature of the new validator.
909. On accepting the new validator for the PoO blockchain, overwriting a previous mapping of the unique tag in the PoO blockchain with a new mapping.
910. The announce message further containing a geographic indication of a location of the new validator.
911. The cryptographic signature of the authorised signer further extending over the geographic indication.

Fig. 10 shows a flow chart of a method for announcing the new validator to the PoO blockchain, the method comprising one or more of the following steps:
1001. Receiving an announce request for the new validator. The new validator may here refer to a node of a validator entity aware of a public key and of a private key with which a PoO validator registration is being applied. For example, a natural person or a computing device, such as a computer could maintain the validator node. Hence, the validator node can be instantiated by the validator entity with same or different devices for the announcing of the validator to the PoO blockchain (if performed from different fixed connection lines) and for subsequent voting from any Internet connection.
1002. Obtaining a PoO attestation for the new validator based on at least: a unique tag that uniquely identifies one fixed communication line of a subscriber of a fixed communication operator; a peer identifier of the new validator; an identifier of an authorised signer, and a cryptographic signature of the authorised signer over at least the unique tag, and the peer identifier.
1003. Containing the generated PoO attestation into an announce message.
1004. Sending the announce message to existing validators of the PoO blockchain.
1005. Obtaining a PoO attestation for the new validator by generating the PoO attestation for the new validator.
1006. Intercepting the announce request from the new validator.
1007. Obtaining a nonce, a peer identifier, and a cryptographic signature of the new validator.
1008. Checking the cryptographic signature of the new validator and performing the obtaining of the PoO attestation for the new validator only if the cryptographic signature of the new validator is correct.
1009. Performing the receiving of the announce request using a web server.
1010. Obtaining and verifying an announce request authenticator as a condition for at least one of the obtaining the attestation, containing the attestation in the announce message, or sending the announce message to the existing validators.
1011. Maintaining a mapping from a current Internet address of the validator and the unique tag.
1012. Obtaining the unique tag based on the mapping for the obtaining of the PoO attestation for the new validator based on the unique tag.

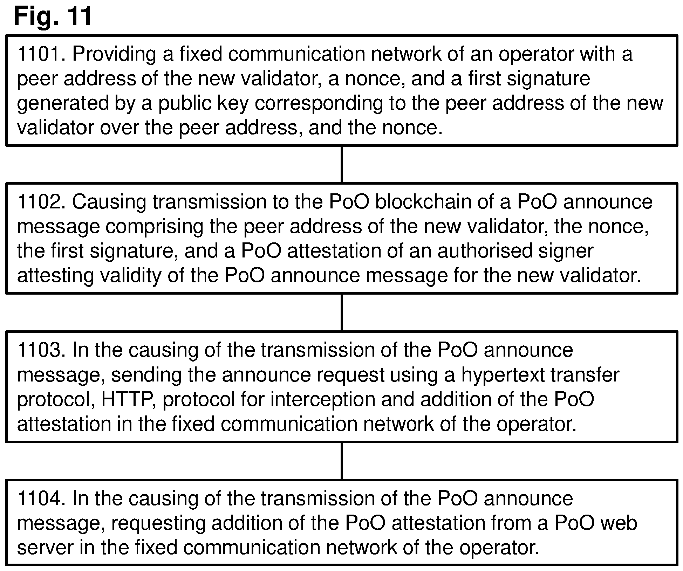

Fig. 11 shows a flow chart of a method for registering a user device as a new validator to the PoO blockchain, the method comprising one or more of the following steps:
1101. Providing a fixed communication network of an operator with a peer address of the new validator, a nonce, and a first signature generated by a public key corresponding to the peer address of the new validator over the peer address, and the nonce.
1102. Causing transmission to the PoO blockchain of a PoO announce message comprising the peer address of the new validator, the nonce, the first signature, and a PoO attestation of an authorised signer attesting validity of the PoO announce message for the new validator.
1103. In the causing of the transmission of the PoO announce message, sending the announce request using a hypertext transfer protocol, HTTP, protocol for interception and addition of the PoO attestation in the fixed communication network of the operator.
1104. In the causing of the transmission of the PoO announce message, requesting addition of the PoO attestation from a PoO web server in the fixed communication network of the operator.

As used in this application, the term "circuitry" may refer to one or more or all of the following:
(a) hardware-only circuit implementations (such as implementations in only analogue and/or digital circuitry) and;
(b) combinations of hardware circuits and software, such as (as applicable):
   (i) a combination of analogue and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is that blockchain proof can be validated based on a limited and verifiable resource that does not require any proof of work related computational mining. Another technical effect of one or more of the example embodiments disclosed herein is that the blockchain proof can be arranged without financial discrimination between different peers. Yet another technical effect of one or more of the example embodiments disclosed herein is that the blockchain proof can be effectively and verifiably geographically distributed. Embodiments may be implemented in software, hardware, application logic or a combination of software, hardware, and application logic. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 8. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects are set out in the independent claims, other aspects comprise other combinations of features from the described embodiments and/or the dependent claims with the features of the independent claims, and not solely the combinations explicitly set out in the claims.

It is also noted herein that while the foregoing describes example embodiments, these descriptions should not be viewed in a limiting sense. Rather, there are several variations and modifications which may be made without departing from the scope of the present invention as defined in the appended claims.

## Claims

1. A method for validating a new validator for a proof-of-origin, PoO, blockchain comprising
receiving (901)
an announce message comprising: a unique tag that uniquely identifies one fixed communication line of a subscriber of a fixed communication operator; a peer identifier of the new validator; an identifier of an authorised signer, and a cryptographic signature of the authorised signer over at least the unique tag, and the peer identifier;
verifying (902) validity of the announce message;
the verifying comprising checking (903) from the PoO blockchain that the authorised signer is registered on the PoO blockchain as an authorised signer; and
the verifying comprising checking (904) the cryptographic signature of the authorised signer in the announce message;
if each checking of the verifying is positive, then accepting (905) the new validator for the PoO blockchain and mapping in the PoO blockchain the unique tag with at least the peer identifier, otherwise refusing the new validator.

2. The method of claim 1, wherein
the announce message further comprises a cryptographic signature of the new validator over at least a nonce and optionally over the peer identifier;
the cryptographic signature of the authorised signer further extends over the cryptographic signature of the new validator; and
the verifying of the validity of the announce message further comprises checking the signature of the new validator.

3. The method of claim 1 or 2, further comprising on accepting the new validator for the PoO blockchain, overwriting a previous mapping of the unique tag in the PoO blockchain with a new mapping.

4. The method of any one of preceding claims, wherein
the announce message further comprises a geographic indication of a location of the new validator; and
the cryptographic signature of the authorised signer further extends over the geographic indication.

5. A method for announcing a new validator to a proof-of-origin, PoO, blockchain, comprising:
receiving an announce request for the new validator;
obtaining a PoO attestation for the new validator based on at least: a unique tag that uniquely identifies one fixed communication line of a subscriber of a fixed communication operator; a peer identifier of the new validator; an identifier of an authorised signer, and a cryptographic signature of the authorised signer over at least the unique tag, and the peer identifier;
containing the generated PoO attestation into an announce message; and
sending the announce message to existing validators of the PoO blockchain.

6. The method of claim 5, further comprising obtaining a PoO attestation for the new validator by generating the PoO attestation for the new validator.

7. The method of claim 5 or 6, further comprising
intercepting the announce request from the new validator;
obtaining a nonce, a peer identifier, and a cryptographic signature of the new validator; and
checking the cryptographic signature of the new validator and performing the obtaining of the PoO attestation for the new validator only if the cryptographic signature of the new validator is correct.

8. The method of any one of claims 5 to 7, wherein the receiving of the announce request is performed using a web server.

9. The method of any one of claims 5 to 8, further comprising obtaining and verifying an announce request authenticator as a condition for at least one of the obtaining the attestation, containing the attestation in the announce message, or sending the announce message to the existing validators.

10. The method of any one of claims 5 to 9, further comprising
maintaining a mapping from a current Internet address of the validator and the unique tag; and
obtaining the unique tag based on the mapping for the obtaining of the PoO attestation for the new validator based on the unique tag.

11. A method for registering a new validator to a proof-of-origin, PoO, blockchain, comprising:
providing a fixed communication network of an operator with a peer address of the new validator, a nonce, and a first signature generated by a public key corresponding to the peer address of the new validator over the peer address, and the nonce; and
causing transmission to the PoO blockchain of a PoO announce message comprising the peer address of the new validator, the nonce, the first signature, and a PoO attestation of an authorised signer attesting validity of the PoO announce message for the new validator.

12. The method of claim 11, wherein the causing of the transmission of the PoO announce message comprises a) sending the announce request using a hypertext transfer protocol, HTTP, protocol for interception and addition of the PoO attestation in the fixed communication network of the operator, or b) requesting addition of the PoO attestation from a PoO web server in the fixed communication network of the operator.

13. A computer program comprising computer executable program code configured to execute any method of preceding claims.

14. An apparatus comprising a memory and a processor that are configured to cause the apparatus to perform the method of any one of claims 1 to 12.

15. A system comprising an apparatus comprising a memory and a processor that are configured to cause the apparatus to perform the method of any one of claims 1 to 10; and an apparatus comprising a memory and a processor that are configured to cause the apparatus to perform the method of claim 11 or 12.

## Patentansprüche

1. Verfahren zum Validieren eines neuen Validierers für eine Herkunftsnachweis(PoO)-Blockkette, das Folgendes umfasst
Empfangen (901) einer Ankündigungsnachricht, die Folgendes umfasst: einen eindeutigen Marker, der eine feste Kommunikationsleitung eines Subskribienten eines festen Kommunikationsoperators eindeutig identifiziert; eine Peerkennung des neuen Validierers; eine Kennung eines autorisierten Signierers und eine kryptographische Signatur des autorisierten Signierers über mindestens den eindeutigen Marker und die Peerkennung;
Verifizieren (902) einer Validität der Ankündigungsnachricht;
wobei das Verifizieren das Prüfen (903) anhand der PoO-Blockkette, dass der autorisierte Signierer in der PoO-Blockkette als ein autorisierter Signierer registriert ist, umfasst; und
wobei das Verifizieren das Prüfen (904) der kryptographischen Signatur des autorisierten Signierers in der Ankündigungsnachricht umfasst;
wenn jedes Prüfen des Verifizierens positiv ist, Akzeptieren (905) des neuen Validierers für die PoO-Blockkette und Zuordnen des eindeutigen Markers zu mindestens der Peerkennung in der PoO-Blockkette, andernfalls Ablehnen des neuen Validierers.

2. Verfahren nach Anspruch 1, wobei
die Ankündigungsnachricht ferner eine kryptographische Signatur des neuen Validierers über mindestens eine Nonce und wahlweise über die Peerkennung umfasst;
die kryptographische Signatur des autorisierten Signierers sich ferner über die kryptographische Signatur des neuen Validierers erstreckt; und
das Verifizieren der Validität der Ankündigungsnachricht ferner das Prüfen der Signatur des neuen Validierers umfasst.

3. Verfahren nach Anspruch 1 oder 2, das ferner ein Akzeptieren des neuen Validierers für die PoO-Blockkette umfasst, wodurch eine vorherige Zuordnung des eindeutigen Markers in der PoO-Blockkette von einer neuen Zuordnung überschrieben wird.

4. Verfahren nach einem der vorhergehenden Ansprüche, wobei
die Ankündigungsnachricht ferner eine geografische Anzeige eines Standorts des neuen Validierers umfasst; und
die kryptographische Signatur des autorisierten Signierers sich ferner über die geografische Anzeige erstreckt.

5. Verfahren zum Ankündigen eines neuen Validierers für eine Herkunftsnachweis(PoO)-Blockkette, das Folgendes umfasst:
Empfangen einer Ankündigungsanforderung für den neuen Validierer;
Erhalten einer PoO-Attestierung für den neuen Validierer auf Basis von mindestens Folgendem: einem eindeutigen Marker, der eine feste Kommunikationsleitung eines Subskribienten eines festen Kommunikationsoperators eindeutig identifiziert; einer Peerkennung des neuen Validierers; einer Kennung eines autorisierten Signierers und einer kryptographischen Signatur des autorisierten Signierers über mindestens den eindeutigen Marker und die Peerkennung;
Einbinden der erzeugten PoO-Attestierung in die Ankündigungsnachricht; und
Senden der Ankündigungsnachricht an existierende Validierer der PoO-Blockkette.

6. Verfahren nach Anspruch 5, das ferner das Erhalten einer PoO-Attestierung für den neuen Validierer durch Erzeugen der PoO-Attestierung für den neuen Validierer umfasst.

7. Verfahren nach Anspruch 5 oder 6, das ferner Folgendes umfasst
Abfangen der Ankündigungsanforderung vom neuen Validierer;
Erhalten einer Nonce, einer Peerkennung und einer kryptographischen Signatur des neuen Validierers; und
Prüfen der kryptographischen Signatur des neuen Validierers und Durchführen des Erhaltens der PoO-Attestierung für den neuen Validierer nur, wenn die kryptographische Signatur des neuen Validierers korrekt ist.

8. Verfahren nach einem der Ansprüche 5 bis 7, wobei das Empfangen der Ankündigungsanforderung unter Verwendung eines Webservers durchgeführt wird.

9. Verfahren nach einem der Ansprüche 5 bis 8, das ferner das Erhalten und Verifizieren eines Ankündigungsanforderungsauthentifikators als eine Bedingung für mindestens eines des Erhaltens der Attestierung, das Einbinden der Attestierung in die Ankündigungsnachricht oder des Sendens der Ankündigungsnachricht an die existierenden Validierer umfasst.

10. Verfahren nach einem der Ansprüche 5 bis 9, das ferner Folgendes umfasst
Beibehalten einer Zuordnung von einer aktuellen Internetadresse des Validierers und des eindeutigen Markers; und
Erhalten des eindeutigen Markers auf Basis der Zuordnung für das Erhalten der PoO-Attestierung für den neuen Validierer auf Basis des eindeutigen Markers.

11. Verfahren zum Registrieren eines neuen Validierers für eine Herkunftsnachweis(PoO)-Blockkette, das Folgendes umfasst:
Bereitstellen eines festen Kommunikationsnetzwerks eines Operators mit einer Peeradresse des neuen Validierers, einer Nonce und einer ersten Signatur, die von einem öffentlichen Schlüssel, der der Peeradresse des neuen Validierers entspricht, über die Peeradresse und die Nonce erzeugt wird; und
Veranlassen einer Übertragung einer PoO-Ankündigungsnachricht, die die Peeradresse des neuen Validierers, die Nonce, die erste Signatur und eine PoO-Attestierung eines autorisierten Signierers umfasst, die eine Validität der PoO-Ankündigungsnachricht für den neuen Validierer attestiert, zur PoO-Blockkette.

12. Verfahren nach Anspruch 11, wobei das Veranlassen der Übertragung der PoO-Ankündigungsnachricht das a) Senden der Ankündigungsanforderung unter Verwendung eines Hypertexttransferprotokoll(HTTP)-Protokolls zum Abfangen und Hinzufügen der PoO-Attestierung im festen Kommunikationsnetzwerk des Operators oder b) das Anfordern eines Hinzufügens der PoO-Attestierung von einem PoO-Webserver im festen Kommunikationsnetzwerk des Operators umfasst.

13. Computerprogramm, das computerausführbaren Programmcode umfasst, der dazu ausgelegt ist, eines der Verfahren nach vorhergehenden Ansprüchen auszuführen.

14. Vorrichtung, die einen Speicher und einen Prozessor umfasst, die dazu ausgelegt sind, die Vorrichtung zu veranlassen, das Verfahren nach einem der Ansprüche 1 bis 12 durchzuführen.

15. System, das eine Vorrichtung umfasst, die einen Speicher und einen Prozessor umfasst, die dazu ausgelegt sind, die Vorrichtung zu veranlassen, das Verfahren nach einem der Ansprüche 1 bis 10 durchzuführen; und eine Vorrichtung, die einen Speicher und einen Prozessor umfasst, die dazu ausgelegt sind, die Vorrichtung zu veranlassen, das Verfahren nach Anspruch 11 oder 12 durchzuführen.

## Revendications

1. Procédé de validation d'un nouveau validateur pour une chaîne de blocs avec preuve d'origine, PoO, comprenant
la réception (901) d'un message d'annonce comprenant : une étiquette unique qui identifie de manière unique une ligne de communication fixe d'un abonné d'un opérateur de communication fixe ; un identifiant de pair du nouveau validateur ; un identifiant d'un signataire autorisé, et une signature cryptographique du signataire autorisé au moins sur l'étiquette unique et l'identifiant de pair ;
la vérification (902) de la validité du message d'annonce ;
la vérification comprenant le contrôle (903), à partir de la chaîne de blocs PoO, pour s'assurer que le signataire autorisé est enregistré sur la chaîne de blocs PoO en tant que signataire autorisé ; et
la vérification comprenant le contrôle (904) de la signature cryptographique du signataire autorisé dans le message d'annonce ;
puis, si chaque contrôle de la vérification est positif, l'acceptation (905) du nouveau validateur pour la chaîne de blocs PoO et le mappage dans la chaîne de blocs PoO de l'identifiant unique avec au moins l'identifiant de pair, et dans le cas contraire le refus du nouveau validateur.

2. Procédé selon la revendication 1, dans lequel
le message d'annonce comprend en outre une signature cryptographique du nouveau validateur sur au moins un nombre aléatoire à usage unique et facultativement sur l'identifiant de pair ;
la signature cryptographique du signataire autorisé s'étend en outre sur la signature cryptographique du nouveau validateur ; et
la vérification de la validité du message d'annonce comprend en outre le contrôle de la signature du nouveau validateur.

3. Procédé selon la revendication 1 ou 2, comprenant en outre, lors de l'acceptation du nouveau validateur pour la chaîne de blocs PoO, l'écrasement d'un mappage précédent de l'identifiant unique dans la chaîne de blocs PoO par un nouveau mappage.

4. Procédé selon l'une des revendications précédentes, dans lequel
le message d'annonce comprend en outre une indication géographique d'un emplacement du nouveau validateur ; et
la signature cryptographique du signataire autorisé s'étend en outre sur l'indication géographique.

5. Procédé d'annonce d'un nouveau validateur sur une chaîne de blocs avec preuve d'origine, PoO, comprenant :
la réception d'une demande d'annonce pour le nouveau validateur ;
l'obtention d'une attestation PoO pour le nouveau validateur sur la base d'au moins : une étiquette unique qui identifie de manière unique une ligne de communication fixe d'un abonné d'un opérateur de communication fixe ; un identifiant de pair du nouveau validateur ; un identifiant d'un signataire autorisé, et une signature cryptographique du signataire autorisé au moins sur l'étiquette unique et l'identifiant de pair ;
l'insertion de de l'attestation PoO générée dans un message d'annonce ; et
l'envoi du message d'annonce aux validateurs existants de la chaîne de blocs PoO.

6. Procédé selon la revendication 5, comprenant en outre l'obtention d'une attestation PoO pour le nouveau validateur en générant l'attestation PoO pour le nouveau validateur.

7. Procédé selon la revendication 5 ou 6, comprenant en outre
l'interception de la demande d'annonce du nouveau validateur ;
l'obtention d'un nombre aléatoire à usage unique, d'un identifiant de pair et d'une signature cryptographique du nouveau validateur ; et
le contrôle de la signature cryptographique du nouveau validateur, et l'obtention de l'attestation PoO pour le nouveau validateur dans le seul cas où la signature cryptographique du nouveau validateur est correcte.

8. Procédé selon l'une des revendications 5 à 7, dans lequel la réception de la demande d'annonce est effectuée à l'aide d'un serveur Web.

9. Procédé selon l'une des revendications 5 à 8, comprenant en outre l'obtention et la vérification d'un authentificateur de demande d'annonce comme condition pour au moins l'une des actions suivantes : l'obtention de l'attestation, l'insertion de l'attestation dans le message d'annonce et l'envoi du message d'annonce aux validateurs existants.

10. Procédé selon l'une des revendications 5 à 9, comprenant en outre
la conservation d'un mappage à partir d'une adresse Internet actuelle du validateur et de l'identifiant unique ; et
l'obtention de l'identifiant unique sur la base du mappage pour obtenir l'attestation PoO pour le nouveau validateur sur la base de l'identifiant unique.

11. Procédé d'enregistrement d'un nouveau validateur sur une chaîne de blocs avec preuve d'origine, PoO, comprenant les étapes suivantes :
fournir à un réseau de communication fixe d'un opérateur une adresse de pair du nouveau validateur, un nombre aléatoire à usage unique et une première signature générée par une clé publique correspondant à l'adresse de pair du nouveau validateur sur l'adresse de pair et le nombre aléatoire à usage unique ; et
provoquer la transmission à la chaîne de blocs PoO d'un message d'annonce PoO comprenant l'adresse de pair du nouveau validateur, le nombre aléatoire à usage unique, la première signature et une attestation PoO d'un signataire autorisé attestant de la validité du message d'annonce PoO pour le nouveau validateur.

12. Procédé selon la revendication 11, dans lequel la provocation de la transmission du message d'annonce PoO comprend a) l'envoi de la demande d'annonce en utilisant un protocole de transfert hypertexte, HTTP, pour l'interception et l'ajout de l'attestation PoO dans le réseau de communication fixe de l'opérateur, ou b) la demande d'ajout de l'attestation PoO à partir d'un serveur Web PoO dans le réseau de communication fixe de l'opérateur.

13. Programme informatique comprenant un code de programme exécutable par ordinateur configuré pour exécuter l'un des procédés des revendications précédentes.

14. Appareil comprenant une mémoire et un processeur qui sont configurés pour amener l'appareil à réaliser le procédé de l'une des revendications 1 à 12.

15. Système comprenant un appareil comprenant une mémoire et un processeur qui sont configurés pour amener l'appareil à réaliser le procédé de l'une des revendications 1 à 10 ; et appareil comprenant une mémoire et un processeur qui sont configurés pour amener l'appareil à réaliser le procédé de la revendication 11 ou 12.
